Europäisches Patentamt

European Patent Office

Office européen des brevets

(19)

(11) Veröffentlichungsnummer: **0 275 357**
**B1**

# (12) EUROPÄISCHE PATENTSCHRIFT

(45) Veröffentlichungstag der Patentschrift:
08.08.90

(21) Anmeldenummer: 87112618.1

(22) Anmeldetag: 29.08.87

(51) Int. Cl.⁵: **F16K 41/10**

(54) **Rohrleitungsarmatur.**

(30) Priorität: 22.12.86 DE 3643926
28.07.87 DE 8710327 U

(43) Veröffentlichungstag der Anmeldung:
27.07.88 Patentblatt 88/30

(45) Bekanntmachung des Hinweises auf die Patenterteilung:
08.08.90 Patentblatt 90/32

(84) Benannte Vertragsstaaten:
BE ES FR IT NL SE

(56) Entgegenhaltungen:
DE-B- 1 023 942
DE-C- 703 985

(73) Patentinhaber: Siepmann-Werke GmbH & Co. KG., Zum
Horkamp 16, D-4788 Warstein 2(DE)

(72) Erfinder: Spanke, Heinz-Peter, Friedrichstrasse 12,
D-4788 Warstein(DE)

(74) Vertreter: Bockermann, Rolf et al, Patent- und
Rechtsanwälte Dr.-Ing. Stuhlmann Dipl.-Ing. Willert
Dr.-Ing. Oidtmann Dipl.-Ing. Bockermann Dipl.-Ing.
Schneiders Bergstrasse 159 Postfach 10 24 50,
D-4630 Bochum 1(DE)

## Beschreibung

Die Erfindung betrifft einen Absperrschieber zur Eingliederung in Rohrleitungen für aggressive und/oder die Umwelt belastende Medien, bei welchem die mit dem vollständig aus dem Rohrleitungsquerschnitt verlagerbaren Verschlußglied verbundene Spindel auf ihrem gesamten Erstreckungsbereich zwischen dem Verschlußglied und einer Spindelabdichtung und/oder Spindellagerung im Gehäuseaufsatz von einem endseitig wenigstens mittelbar einerseits am Verschlußglied und andererseits am Gehäuseaufsatz dicht befestigten, in mindestens zwei Längenabschnitte untergliederten Metallfaltenbalg mit durch Anschläge begrenzter axialer Flexibilität ummantelt ist, die unter gegenseitiger Abstützung teleskopierbar konzentrisch ineinandergeschachtelt sind, wobei das dem Verschlußglied abgewandte Ende des inneren Längenabschnitts am Boden einer den inneren Längenabschnitt umschließenden und von dem äußeren Längenabschnitt umschlossenen Hülse dicht befestigt und die Hülse mit ihrem unteren Ende außenseitig eines sich von dem Verschlußglied aus in Richtung auf den Gehäuseaufsatz erstreckenden rohrförmigen Stutzens und mit ihrem oberen Ende an der Spindel geführt ist.

Im Umfang der gattungsprägenden DE-B 1 023 942 hat man versucht, durch das Ineinanderschachteln mehrerer Metallfaltenbälge die Bauhöhe eines Absperrschiebers zu verringern. Hierbei hat man aber dem Sachverhalt keine Beachtung geschenkt, daß die axial verlagerbare Gewindespindel mindestens um den Hub des Verschlußglieds über das Handrad nach oben vorsteht, wenn sich der Absperrschieber in der Offen-Position befindet. Somit ist dieser Absperrschieber hinsichtlich seines Einsatzspektrums Beschränkungen unterworfen.

Eine weitere Eigenart des bekannten Absperrschiebers besteht darin, daß die Festlegung des äußeren Längenabschnitts des Metallfaltenbalgs mittels einer den Metallfaltenbalg glockenförmig übergreifenden Hülse erfolgt. Dazu muß das obere Ende des äußeren Längenabschnitts innenseitig des oberen Endes der Hülse und die Hülse selber am unteren Ende mittels eines Ringkragens zwischen Flanschen der Rohrleitung und des weit nach unten gezogenen Gehäuseaufsatzes festgelegt werden. Der hiermit verbundene Aufwand ist hoch.

Schließlich muß für einen Wechsel des Verschlußglieds dieses komplett von dem unteren Ende der Schieberspindel gelöst werden. Dadurch geht aber der durch den Metallfaltenbalg bewirkte hermetische Abdichtungseffekt verloren, weil dann das gesamte System nach unten offen ist.

Der Erfindung liegt die Aufgabe zugrunde, den im Oberbegriff des Anspruchs 1 beschriebenen Absperrschieber so zu verbessern, daß bei axial unverlagerbarer Spindel ein verminderter Gestehungsaufwand für insbesondere den Gehäuseaufsatz erzielt sowie in allen Betriebs- und Wartungspositionen eine permanente Abdichtwirkung der inneren Abdichtgarnitur gewährleistet werden kann.

Die Lösung dieser Aufgabe besteht nach der Erfindung darin, daß sowohl das untere Ende des inneren Längenabschnitts als auch der Stutzen an einem Hubrohr befestigt sind, das in einem Abschlußorgan des Verschlußglieds lösbar festgelegt ist, wobei die Spindel mit einem am unteren Ende vorgesehenen Gewindeabschnitt in einen Bestandteil des Hubrohrs bildende Gewindemutter eintaucht, und daß der äußere Längenabschnitt mit seinem unteren Ende an einem nach außen gerichteten Kragen der Hülse und mit seinem oberen Ende an der etwa in demselben Höhenbereich liegenden Deckelflanschverbindung befestigt ist.

Der bekannte Gedanke, die Längenabschnitte des Metallfaltenbalgs konzentrisch ineinanderzuschachteln und relativbeweglich einander zuzuordnen, schafft im kombinativen Zusammenwirken mit der axial nicht verlagerbaren und mit einem Gewindeabschnitt in das Hubrohr eintauchenden Spindel in einfacher Weise die Voraussetzungen dafür, daß unter Beibehaltung der einwandfreien Abdichtung des Spindeleintritts einerseits in das mit einer Spindelmutter ausgerüstete Hubrohr in Gehäuseaufsatz dessen Ausdehnung in axialer Richtung nunmehr um einem wesentlichen Betrag gesenkt werden kann. Die Fertigung des Absperrschiebers wird hierdurch erheblich vereinfacht.

Da die in das Hubrohr integrierte Spindelmutter einwandfrei von dem den Absperrschieber durchströmenden Medium getrennt werden kann, können sich auch keine Ausscheidungen oder Verunreinigungen des Mediums an der Spindelmutter festsetzen, was bislang bei einigen Bauarten mit unverlagerbarer Spindel zu einem Ausfall des Absperrschiebers geführt hat.

Um eine einwandfreie Festlegung des äußeren Längenabschnitts des Metallfaltenbalgs an der Hülse sicherzustellen, ist am unteren freien Rand der Hülse ein Radialflansch vorgesehen, an welchem das untere Ende des äußeren Längenabschnitts festgeschweißt ist. Die Aufnahme des oberen Endes des äußeren Längenabschnitts erfolgt z.B. derart, daß eine mit diesem Ende verschweißte Scheibe zwischen zwei Dichtungen in der Deckelflanschverbindung eingespannt wird.

Die Befestigung des unteren Endes des inneren Längenabschnitts an einem in ein Abschlußorgan des Verschlußglieds eingebetteten und hier lösbar festlegbaren Hubrohr ist mit dem Vorteil verbunden, daß das Abschlußorgan vergleichsweise problemlos ausgetauscht oder repariert werden kann, ohne daß hierbei der Gewindebereich von Spindel und Hubrohr gelöst werden müßte. Folglich bleibt die angestrebte hermetische Abdichtung voll erhalten.

Nach Anspruch 2 dient ein Querbolzen zur Kopplung von Hubrohr und Abschlußorgan. Dazu ist der Boden des Hubrohrs zweckmäßig verdickt ausgebildet.

Die Erfindung ist nachfolgend anhand eines in der Zeichnung dargestellten Ausführungsbeispiels näher erläutert. Es zeigen:

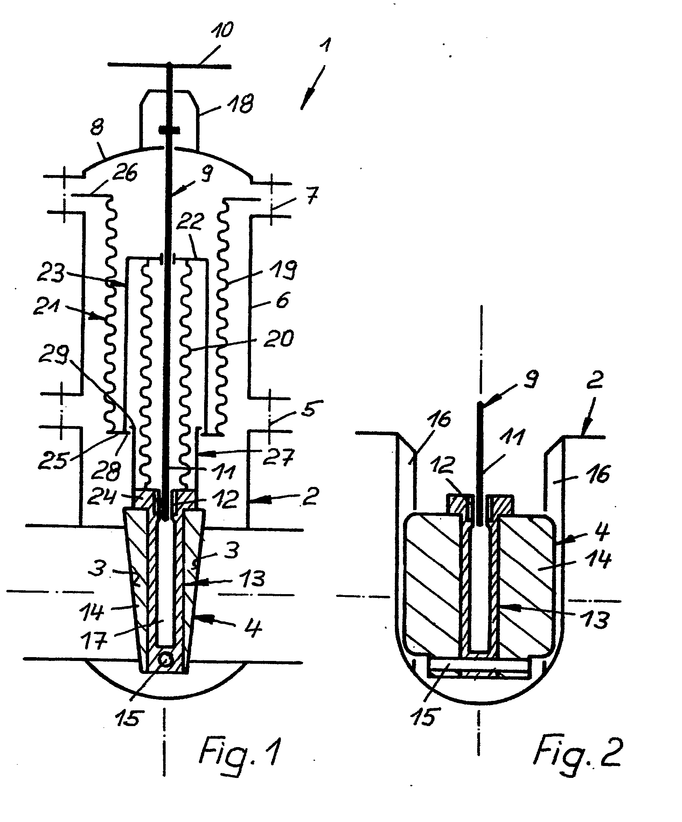

Figur 1 im schematischen vertikalen Längsschnitt einen Absperrschieber und

Figur 2 im vertikalen Querschnitt den Verschlußgliedbereich des Absperrschiebers.

Der dargestellte Absperrschieber 1 weist einen
Gehäuseunterteil 2 mit Dichtsitzen 3 für ein Verschlußglied in Form eines keilförmigen Schiebers 4
auf. Mit dem Gehäuseunterteil 2 ist über Schraubbolzen 5 ein Zwischenteil 6 und mit dem oberen Ende
des Zwischenteils 6 ebenfalls über Schraubbolzen
7 ein Gehäuseaufsatz 8 lösbar verbunden.

Zur Verlagerung des Verschlußglieds 4 dient eine im Gehäuseaufsatz 8 zwar drehbare, axial jedoch nicht verlagerbare Spindel 9 mit Handrad 10.
Am unteren Ende der Spindel 9 ist ein Gewindeabschnitt 11 vorgesehen, der in eine Gewindemutter 12
formschlüssig eingreift, die am oberen Ende eines
Hubrohrs 13 befestigt ist, welches in dem Abschlußorgan 14 des Verschlußglieds 4 lösbar festgelegt ist. Die Festlegung erfolgt durch einen Querbolzen 15, der das Abschlußorgan 14 und das Hubrohr 13 am unteren Ende des Verschlußglieds 4
quer durchsetzt. Das Abschlußorgan 14 ist entlang
von seitlichen Zwangsführungen 16 im Gehäuseunterteil 2 in axialer Richtung verlagerbar.

Bei einer Drehung des Handrads 10 verlagert
sich folglich die Spindelmutter 12 entlang des Gewindeabschnitts 11 gemeinsam mit dem Verschlußglied
4. Dabei taucht der Gewindeabschnitt 11 der Spindel
9 in den Innenraum 17 des Hubrohrs 13 ein, wenn
das Verschlußglied 4 in die Offenstellung bewegt
wird.

In einem Ansatz 18 des Gehäuseaufsatzes 8 ist
eine nicht näher veranschaulichte Sicherheitsstopfbuchse vorgesehen. Die Packung in dieser
Stopfbuchse ist mit Hilfe von ebenfalls nicht näher
dargestellten Schraubbolzen, einer Stopfbuchsenbrille sowie eines Druckrings nachspannbar.

Der Erstreckungsbereich der Spindel 9 zwischen
dem Verschlußglied 4 und dem Gehäuseaufsatz 8
wird durch einen aus zwei Längenabschnitten 19, 20
bestehenden Metallfaltenbalg 21 ummantelt. Die
Längenabschnitte 19, 20 sind unter gegenseitiger
Abstützung teleskopierbar konzentrisch ineinandergeschachtelt. Es ist zu erkennen, daß das dem
Verschlußglied 4 abgewandte Ende des inneren
Längenabschnitts 20 am Boden 22 einer den inneren
Längenabschnitt 20 umschließenden und von dem
äußeren Längenabschnitt 19 umschlossenen Hülse
23 befestigt ist. Das andere Ende des inneren Längenabschnitts 20 ist an einem Kragen 24 des Hubrohrs 13 festgelegt. Das dem Verschlußglied 4 zugewandte Ende des äußeren Längenabschnitts 19
ist am unteren freien Rand 25 der Hülse 23 und das
andere Ende an der Deckel-Flansch-Verbindung 7
dicht befestigt. Dazu kann der äußere Längenabschnitt 19 mit einer Scheibe 26 verschweißt sein, die
dann zwischen dem Gehäuseaufsatz 8 und dem Zwischenteil 6 dicht festgelegt wird.

Die Hülse 23 ist mit ihrem unteren Ende außenseitig eines sich von dem Verschlußglied 4 aus in Richtung auf den Gehäuseaufsatz 8 erstreckenden
rohrförmigen Stutzens 27 und mit ihrem oberen
Ende 22 an der Spindel 9 geführt. Am unteren Ende
der Hülse 23 ist ein radial einwärts gerichteter
Kragen 28 und am oberen Ende des Stutzens 27 ein radial auswärts gerichteter Kragen 29 vorgesehen.

Die Längenabschnitte 19, 20 des Metallfaltenbalgs 21 können eine voneinander abweichende
axiale Flexibilität aufweisen.

<u>Bezugszeichenaufstellung</u>

1 Absperrschieber
2 Gehäuseunterteil
3 Dichtsitze
4 Verschlußglied
5 Schraubbolzen
6 Zwischenteil
7 Schraubbolzen
8 Gehäuseaufsatz
9 Spindel
10 Handrad
11 Gewindeabschnitt
12 Gewindemutter
13 Hubrohr
14 Abschlußorgan
15 Querbolzen
16 Zwangsführungen
17 Innenraum v. 13
18 Ansatz v. 8
19 äußerer Längenabschnitt v. 21
20 innerer Längenabschnitt v. 21
21 Metallfaltenbalg
22 Boden v. 23
23 Hülse
24 Kragen v. 13
25 freier Rand v. 23
26 Scheibe
27 Stutzen
28 Kragen an 23
29 Kragen an 27

**Patentansprüche**

1. Absperrschieber zur Eingliederung in Rohrleitungen für aggressive und/oder die Umwelt belastende Medien, bei welchem die mit dem vollständig
aus dem Rohrleitungsquerschnitt verlagerbaren
Verschlußglied (4) verbundene Spindel (9) auf ihrem gesamten Erstreckungsbereich zwischen dem
Verschlußglied (4) und einer Spindelabdichtung
und/oder Spindellagerung im Gehäuseaufsatz (8)
von einem endseitig wenigstens mittelbar einerseits
am Verschlußglied (4) und andererseits am Gehäuseaufsatz (8) dicht befestigten, in mindestens zwei
Längenabschnitte (19, 20) untergliederten Metallfaltenbalg (21) mit durch Anschläge begrenzter axialer
Flexibilität ummantelt ist, die unter gegenseitiger Abstützung teleskopierbar konzentrisch ineinandergeschachtelt sind, wobei das dem Verschlußglied (4)
abgewandte Ende des inneren Längenabschnitts
(20) am Boden (22) einer den inneren Längenabschnitt (20) umschließenden und von dem äußeren
Längenabschnitt (19) umschlossenen Hülse (23)
dicht befestigt und die Hülse (23) mit ihrem unteren
Ende (25) außenseitig eines sich von dem Verschlußglied (4) aus in Richtung auf den Gehäuseaufsatz (8) erstreckenden rohrförmigen Stutzens

(27) und mit ihrem oberen Ende (22) an der Spindel (9) geführt ist, dadurch gekennzeichnet, daß sowohl das untere Ende des inneren Längenabschnitts (20) als auch der Stutzen (27) an einem Hubrohr (13) befestigt sind, das in einem Abschlußorgan (14) des Verschlußglieds (4) lösbar festgelegt ist, wobei die Spindel (9) mit einem am unteren Ende vorgesehenen Gewindeabschnitt (11) in eine Bestandteil des Hubrohrs (13) bildende Gewindemutter (12) eintaucht, und daß der äußere Längenabschnitt (19) mit seinem unteren Ende an einem nach außen gerichteten Kragen (28) der Hülse (23) und mit seinem oberen Ende an der etwa in demselben Höhenbereich liegenden Deckelflanschverbindung (7) dicht befestigt ist.

2. Absperrschieber nach Anspruch 1, dadurch gekennzeichnet, daß das Hubrohr (13) durch einen Querbolzen (15) im Abschlußorgan (14) des Verschlußglieds (4) festlegbar ist.

## Claims

1. A gate valve for incorporation in pipelines for aggressive and/or environmentally harmful media, in which valve the spindel (9) which is connected to the sealing member (4) which is movable to a position wholly outside of the cross-section of the pipeline, is surrounded over its entire length between the sealing member (4) and a spindel seal and/or spindel bearing in the housing cover (8) by a metal folding bellows (21) which is sealingly attached at one end to the sealing member (4) and at its other end to the housing cover (8) and which is divided into at least two longitudinal sections (19, 20), the axial flexibility of the metal folding bellows (21) being limited by stops, the sections being supported so as to be telescopically, concentrically encased within each other, the end of the inner longitudinal section (20) which is remote from the sealing member (4) being sealingly attached to the base (22) of a sleeve (23) which surrounds the inner longitudinal section (20) and which is surrounded by the outer longitudinal section (19), the sleeve (23) being guided at its lower end (25) on the outside of a cylindrical support (27) which extends away from the sealing member (4) in a direction towards the housing cover (8) and being guided at its upper end (22) upon the spindle (9), characterised in that both the lower end of the inner longitudinal section (20) and the support (27) are attached to a displacement tube (13) which is removably located within a closure element (14) of the sealing member (4), whereby a threaded portion (11) at the lower end of the spindle (9) extends into a threaded nut (12) forming part of the displacement tube and in that the outer longitudinal section (19) is sealingly attached at its lower end to an outwardly directed collar (28) of the sleeve (23) and is sealingly attached at its upper end to the cover flange connection (7) which is located at approximately the same height level.

2. A gate valve according to Claim 1, characterised in that the displacement tube (13) is locatable within the closure element (14) of the sealing member (4) by means of a transverse pin (15).

## Revendications

1. Vanne d'arrêt destinée à être incorporée dans des canalisations pour fluides agressifs et/ou nocifs pour l'environnement, dans laquelle la tige (9) reliée à l'élément de fermeture (4) entièrement déplaçable hors de la section de canalisation est enveloppée sur la totalité de son étendue entre l'élément de fermeture (4) et un élément d'étanchéité de tige et/ou un logement de tige dans le chapeau du logement (8) par un soufflet métallique (20) fixé de façon étanche au moins d'une part directement sur l'élément de fermeture (4) et d'autre part sur le chapeau de logement (8), divisé en au moins deux sections longitudinales (19, 20) avec une souplesse axiale limitée par des butées, qui sont emboîtées concentriquement de façon télescopique en appui réciproque, l'extrémité de la section longitudinale opposée à l'élément de fermeture (4) fixant de façon étanche une gaine (23) entourant la section longitudinale intérieure (20) et étant enveloppée par la section longitudinale extérieure (19) et la gaine (23) étant guidée par son extrémité inférieure (25) à l'extérieur d'un ajutage tubulaire (27) s'étendant à partir de l'élément de fermeture (4) en direction du chapeau de logement (8) et par son extrémité supérieure (22) sur la tige (9), caractérisée en ce que tant l'extrémité inférieure de la section longitudinale intérieure (20) que l'ajutage (27) sont fixés sur un tube de levage (13), qui est maintenu en place de façon amovible dans un organe d'obturation (14) de l'élément de fermeture (4), la tige (9) s'enfonçant par une section de filetage (11) prévue sur une extrémité inférieure, et en ce que la section longitudinale extérieure (19) est fixée de façon étanche par son extrémité inférieure sur un collet dirigé vers l'extérieur (28) de la gaine (23) et par son extrémité supérieure sur le raccordement (7) de la bride d'obturation situé sensiblement à la même hauteur.

2. Vanne d'arrêt selon la revendication 1, caractérisée en ce que le tube de levage (13) peut être fixé par un boulon traversant (15) dans l'organe d'obturation (14) de l'élément de fermeture (4).

Fig.1

Fig.2